# EUROPEAN PATENT APPLICATION

(11) **EP 4 489 430 A1**
(43) Date of publication of application: **08.01.2025**
(21) Application number: 23182991.2
(22) Date of filing: 03.07.2023
(51) Int. Cl.: H04R 1/10, H04R 25/00

(54) **A SYSTEM COMPRISING A HEARING DEVICE AND A CHARGING DEVICE, A CHARGING DEVICE AND A METHOD OF CHARGING A HEARING DEVICE**

(71) Applicant: GN Hearing A/S, 2750 Ballerup (DK)
(72) Inventor: Lindberg, Christopher Wessel, 2100 København Ø (DK); Pinto, Alexandre Da Luz, 2300 København S (DK); Pu, Shi, 2840 Holte (DK); Tiefenau, Andreas, 2840 Holte (DK)
(74) Representative: Zacco Denmark A/S

(57) **Abstract**

Disclosed is a system comprising a hearing device and a charging device. The hearing device comprises a hearing device antenna, a hearing device wireless communication unit, the hearing device wireless communication unit being coupled to the hearing device antenna, the hearing device wireless communication unit and the hearing device antenna being configured for transmission and reception of electromagnetic signals at a first frequency. The hearing device further comprises a rechargeable battery configured to be charged by the charging device. The charging device being configured to receive the hearing device to enable charging of the hearing device. The charging device comprises a charging device wireless communication unit, the charging device wireless communication unit being interconnected with a coupling structure. The coupling structure comprises a conducting element and a ground plane, the ground plane being positioned within a first distance of the conducting element. The coupling structure is configured so that upon reception of the hearing device in the charging device, a frequency response of the conducting element is modified thereby enabling near-field coupling of the hearing device antenna to the conducting element.

## Description

### FIELD

The present invention relates to rechargeable hearing devices. More specifically, the disclosure relates to a system comprising a hearing device and a charging device. Particularly, the disclosure relates to determining a state of the hearing device in the charging device.

### BACKGROUND

Hearing devices capable of wireless communication are well known in the art, and such hearing devices typically comprises wireless transceivers and one or more antennas.

Such hearing devices are typically powered using rechargeable batteries, and thus, there is a need for charging the rechargeable batteries. Such charging may be performed by removing the batteries from the hearing device for charging. Alternatively, the hearing device including the rechargeable batteries may be arranged in a casing for charging the rechargeable batteries of the hearing device.

In some instances, the hearing device should be turned off, before inserting the hearing device into the casing for charging. In other instances, the hearing device is communicating with the charging case, while at the same time ensuring that the charging of the hearing device batteries does not create any problems, such as over-charging, overheating, etc. Typically, during charging, information is transmitted between the hearing device and the charging case, such information including charge status.

However, there is a need for an improved method of charging a hearing device in a charging device and an improved hearing device and charging case system, improving the charging of rechargeable batteries of a hearing device.

### SUMMARY

It is an object of embodiments of the present disclosure to identify insertion of a hearing device into a charging device.

It is another object of the embodiment of the present disclosure to provide a system of the hearing device and a charging device capable of identifying charging field upon insertion of the hearing device into the charging device to thereby signal that insertion to the hearing aid.

It is a further object of the embodiments of the present disclosure to avoid feedback whistling of the hearing device when inserted into the charging device

According to a first aspect a system comprising a hearing device and a charging device is disclosed. The hearing device comprises a hearing device antenna and a hearing device wireless communication unit coupled to the hearing device antenna. The hearing device wireless communication unit and the hearing device antenna are configured for transmission and reception of electromagnetic signals at a first frequency. The hearing device further comprises a rechargeable battery configured to be charged by the charging device. The charging device is configured to receive the hearing device to enable charging of the hearing device. The charging device comprises a charging device wireless communication unit interconnected with a coupling structure. The coupling structure comprise a conducting element and a ground plane. The ground plane is positioned within a first distance of the conducting element. The coupling structure is configured so that upon reception of the hearing device in the charging device, a frequency response of the conducting element is modified thereby enabling near-field coupling of the hearing device antenna to the conducting element.

In some embodiments, the hearing device antenna is an electric antenna.

The system comprises a hearing device and a charging device which may be paired. In some embodiments, the pairing is performed via a standard protocol, such as via a Bluetooth protocol. In some embodiments, the pairing is performed upon set-up of the hearing device and the charging device. In some embodiments, the pairing is performed prior to charging of the hearing device using the charging device. The charging device may be a casing for the hearing device. The charging device may equally be termed a charger.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

In an embodiment, a hearing device is configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing device system, such as a binaural hearing aid system. The hearing device may be configured for communication with one or more other devices, such as configured for communication with another hearing device or with an accessory device or with a peripheral device.

The hearing device may be embodied in various housing styles or form factors. Some of these form factors are Behind-the-Ear (BTE) hearing device, Receiver-in-Canal (RIC) hearing device Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the output transducer may be comprised in the ITE unit, which is coupled to the BTE unit via a connector cable or electrical wire/tube configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, moulded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

The hearing device comprises a hearing device antenna, a hearing device wireless communication unit, and a rechargeable battery.

The hearing device antenna may be configured for wireless communication. The hearing device wireless communication unit and the hearing device antenna are configured for transmission and reception of electromagnetic signals at a first frequency. In the present context the first frequency may be understood as a center frequency of a first frequency range. The first frequency may correspond to the operational frequency of the hearing device antenna.

In some embodiments the hearing device may comprise one or more antennas. The hearing device antenna(s) may comprise an electric antenna. The hearing device antenna may be configured for wireless communication at a first frequency. The first frequency may be above 800 MHz, preferably a frequency between 900 MHz and 6 GHz. The first frequency may be in the range of 902 MHz to 928 MHz. The first frequency may be in the range of 2.4 to 2.5 GHz. The first frequency may be in the range of 5.725 GHz to 5.875 GHz. The hearing device antenna, such as an electric hearing device antenna may be any antenna capable of operating at these frequencies, and the hearing device antenna may be a resonant antenna; the hearing device antenna may be a monopole antenna, a dipole antenna, etc. The hearing device antenna, such as a resonant hearing device antenna, may have a length of λ/4±10% or any multiple thereof, λ being the wavelength corresponding to the frequency of the emitted/received electromagnetic field.

The hearing device may additionally comprise a further antenna, such as a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

The hearing device wireless communication unit is coupled to the hearing device antenna. The hearing device wireless communication unit may comprise one or more wireless receiver(s), one or more wireless transmitter(s), one or more transmitter-receiver pair(s) and/or one or more transceiver(s). At least one of the one or more hearing device wireless communication unit(s) may be coupled to the one or more antenna(s). The hearing device wireless communication unit may be configured for converting a wireless signal received by at least one of the one or more antenna(s) into a second electric input signal. The hearing device may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another hearing device, e.g., as part of a binaural or bilateral hearing device system and/or from one or more accessory device(s), such as a charging device, smartphone and/or a smart watch.

The rechargeable battery may form part of a power source and/or hearing device charging circuit of the hearing device and is typically arranged inside of the hearing device and configured to provide a first voltage to various components of the hearing device. The power source and/or hearing device charging circuit may comprise a power management unit, such as a hearing device power management unit. The hearing device power management unit may be configured to convert the first voltage into a second voltage. The power source and/or hearing device charging circuit may comprise a receiver charging element, such as a receiver charging coil. The receiver charging coil may be provided by the magnetic antenna. The rechargeable battery may be a replaceable battery. The rechargeable battery is configured to be charged by the charging device. The charging device may start charging the hearing device only upon insertion of the hearing device into the charging device. The charging device may be a charging case for the hearing device.

The charging device is configured to receive the hearing device to enable charging of the hearing device. The charging device may comprise a cavity for placement of the hearing device or alternatively, the hearing device may be placed onto the charging device and the charging may be performed by transmitting charging pulses to the hearing device. The charging device may comprise a charging device charging circuit. The charging device charging circuit may comprise a power management unit, such as a charging device power management unit. The charging device power management unit may be configured to convert a third voltage into the first voltage, wherein the third voltage is received by the charging device and the first voltage is provided by the charging device to the hearing device. The charging device charging circuit may comprise a transmitter charging element, such as a transmitter charging coil. The transmitter charging coil may be provided by a further magnetic antenna. The charging device may be plugged into an electric socket to thereby enable charging of the hearing device. Alternatively, the charging device may be configured to store power which is then transferred to the hearing device once charging is initiated. The charging device may be configured to receive two hearing devices and enable their charging simultaneously or alternatingly.

The charging device comprises a charging device wireless communication unit and a coupling structure.

The charging device wireless communication unit is coupled to the coupling structure. In particular, the charging device wireless communication unit may be coupled to the conducting element of the coupling structure. The charging device wireless communication unit typically comprises one wireless receiver, one wireless transmitter, one transmitter-receiver pair and/or one transceiver. The charging device wireless communication unit can also be modified to comprise more than one of the mentioned components. The charging device wireless communication unit may be configured for converting a wireless signal received by the coupling structure into an electric input signal. In an embodiment, the charging device wireless communication unit receives a wireless signal originating from the hearing device, i.e. from the hearing device wireless communication unit. The charging device wireless communication unit and the conducting structure may be configured for transmission and reception of electromagnetic signals at the first frequency, equal to the operational frequency of the hearing device antenna.

The coupling structure comprises a conducting element and a ground plane, the ground plane being positioned within a first distance of the conducting element. The first distance may depend on the intended operational frequency of the coupling structure and the charging device wireless communication unit. The first distance may also depend on a dielectric constant of a substrate on which the coupling structure is arranged. The first distance may be defined based on the first frequency.

The conducting element may be an elongated conducting element. The conducting element may be understood as an antenna of the charging device which has a low performance and operates as an antenna only when the hearing device is inserted into the charging device. The charging device wireless communication unit may be interconnected with the conducting element of the coupling structure.

The conducting element may have a shape being an elongated shape, such as a wire form. The conducting element may have a length and a width; the width being less than 5 mm, such as less than 2 mm, such as less than 1 mm. The length may be comparable to a quarter of a wavelength of the first frequency, however, the length may be smaller or larger. In some embodiments, the length of the conducting element is between λ/4 -10% and λ/4 + 10%, λ being the wavelength corresponding to the first frequency, which may correspond to the operational frequency of the hearing device wireless communication unit and the intended operational frequency of the charging device wireless communication unit.

The ground plane is a conducting surface typically larger than the operational wavelength (corresponding to the first frequency). The ground plane is connected to the charging device's electrical ground and typically serves as a reflecting surface for radio waves received at the charging device.

The coupling structure is configured so that upon reception of the hearing device in the charging device, a frequency response of the conducting element is modified thereby enabling near-field coupling of the hearing device antenna to the conducting element. In other words, the hearing device antenna induces the modification of the frequency response as the hearing device gets closer to the charging device. The frequency response of the conducting element may be in particular modified around the first frequency.

It is an advantage of having a charging device with a simple coupling structure which frequency response can be modified under influence of the hearing device being inserted into the charging device. By detecting the modification of the frequency response, it is possible to detect that the hearing device is inserted into the charging device. The hearing device may then be operated in accordance with such detection. The state of the hearing device may be "inserted into charging device" and the hearing device may be operated according to such state. It is additionally an advantage that the state of the hearing device can be determined by using a measurement, such as a simple measurement, of frequency response of the conducting element. It is an additional advantage that the hearing device may be prevented from squealing when inserted into the charging device.

It is an advantage of using the coupling structure to determine that the hearing device is in the charging device in that such coupling structure and the determination of the modified frequency response is less sensitive to environmental parameters that e.g. a regular antenna positioned in the charging device.

In an embodiment, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In an embodiment, the hearing device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In an embodiment, the hearing device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the hearing device. One or more of the input transducer(s) may be comprised in an ITE unit or in an earpiece.

In an embodiment, the hearing device wireless communication unit may be configured for converting the second electric output signal into a wireless output signal. The wireless output signal may comprise synchronization data. The hearing device wireless communication unit may be configured for transmitting the wireless output signal via at least one of the one or more hearing device antennas.

In an embodiment, the hearing device may comprise a digital-to-analogue converter configured to convert the first electric output signal, the second electric output signal and/or the wireless output signal into an analogue signal.

In an embodiment, the hearing device may comprise a vent. A vent is a physical passageway such as a canal or tube primarily placed to offer pressure equalization across a housing placed in the ear such as an ITE hearing device, an ITE unit of a BTE hearing device, a CIC hearing device, a RIE hearing device, a RIC hearing device, a MaRIE hearing device or a dome tip/earmold. The vent may be a pressure vent with a small cross section area, which is preferably acoustically sealed. The vent may be an acoustic vent configured for occlusion cancellation. The vent may be an active vent enabling opening or closing of the vent during use of the hearing device. The active vent may comprise a valve.

In an embodiment, the hearing device may comprise a memory, including volatile and nonvolatile forms of memory.

In some embodiments, enabling coupling, such as near-field coupling, of the hearing device antenna to the conducting element may initiate communication between the hearing device wireless communication unit and the charging device wireless communication unit. Communication between the hearing device wireless communication unit and the charging device wireless communication unit may include at first a handshake, and then once the handshake is made the communication may include a device identification, charging initiation, charging status, charging settings, and charging instructions.

In some embodiments, near-field coupling may occur when the hearing device antenna and the conducting element of the charging device are within each other's near-field and operating at a same frequency. The hearing device antenna and the conducting element of the charging device may for example be within a distance of each other of 1/4 of a wavelength, such as within 1/8 of a wavelength, such as within 1/16 of a wavelength, the wavelength corresponding to the intended operational frequency of the hearing device antenna. In some embodiments, the near-field coupling between the hearing device antenna and the conducting element of the charging device is efficient when the distance between them is below 1/4 of a wavelength, such as below 1/8 of a wavelength, such as below 1/16 of a wavelength, the wavelength corresponding to the intended operational frequency of the hearing device antenna. In some embodiments, communication between the hearing device and the charging device is enabled via near-field coupling between the hearing device antenna and the conducting element of the charging device.

In some embodiments, presence of the hearing device in the charging device may be detected upon detection of modification of the frequency response. In some embodiments, when modification of the frequency response is detected, it may be determined that the hearing device is in proximity to the charging device. When presence of the hearing device in the charging device is detected, settings of the hearing device may be controlled, so that for example the hearing device may be muted or change state to thereby reduce any possible squealing of the hearing device upon insertion into the charging device. It is an advantage of being able to detect a state, i.e. presence/proximity, of the hearing device in the charging device and to thereby operate the hearing device to such state. It is additionally an advantage that the state of the hearing device can be determined by detecting modification of the frequency response. It is an additional advantage that the hearing device may be prevented from squealing when inserted into the charging device.

In some embodiments, the charging device wireless communication unit further comprises a detector configured for detecting power reflected from the conducting element into the charging device wireless communication unit. The reflected power may indicate the frequency response of the conducting element. The reflected power, i.e. the power reflected back into the charging device wireless communication unit, can be understood as a complement to a power transmitted from the charging device and received at the hearing device. The transmitted power is typically quantified by received signal strength indicator (RSSI) or received channel power indicator (RCPI). The charging device wireless communication unit may comprise a circuit configured to measure RSSI or RCPI. The reflected power, such as a level of reflected power, may indicate, for example, a degree of matching between the charging device wireless communication unit and the conducting element. In some embodiments, when the hearing device is placed in the charging device, e.g. is removed from the intended operational position in or at an ear of a user and placed in the charging device, the power reflected from the conducting element into the charging device wireless communication unit will change, as the surrounding environment of the conducting element changes, resulting in a decrease of power reflected into the charging device wireless communication unit. It is an advantage that by detecting a reflected power signal a state of the hearing device may be determined, based on the reflected power signal. The state of the hearing device comprising a first state in which the hearing device is inserted into the charging device. In some embodiments, the RSSI is measured based on a broadcasting signal being sent from the charging device wireless communication unit, such as a broadcasting signal being continuously sent from the wireless communication unit. In some embodiments, the RSSI is measured for any signal received at the charging device in response to a broadcasting signal emitted from the charging device, such as emitted from the charging device wireless communication unit via the charging device antenna.

In some embodiments, the frequency response modification is determined by determining power reflected from the conducting element into the charging device wireless communication unit. A reflected power above a first threshold indicates that the hearing device is not received in the charging device. When the hearing device is far from the charging device, most of the power transmitted from the conducting element is reflected back into the charging wireless communication unit. A reflected power below the first threshold indicates that the hearing device is received in the charging device. When the hearing device is received in the charging device, power reflected into the charging device wireless communication unit is smaller than in the case when the hearing device is far away as the proximity of the hearing device changes the frequency response of the conducting element and thereby improves the matching between the conducting element and the charging device wireless communication unit. In some embodiments, the first threshold may be a difference in reflected power in cases when the hearing device is inserted and not inserted into the charging device. In this case, the first threshold may be 3 dB. Generally, 100% (0 dB) to 25% (-6 dB) reflected power may indicate that the hearing device is not inserted into the charging device and less than 25% (-6 dB) (up to 0% (-100 dB)) reflected power may indicate that the hearing device is inserted into the charging device. Typically, antennas are well matched if less than 10% (-3 dB) of the power is reflected.

In some embodiments, the conducting element is provided on a first surface of a support substrate extending over a first area, and the ground plane may be provided on an opposite second surface of the support substrate and at least partly overlaying the first area. In this way, coupling between the conducting element and the ground plane is ensured. Alternatively, the conducting element may be provided on a first surface of a support substrate, and the ground plane may be provided adjacent to and surrounding at least a part of the conducting element. Having the ground plane in a close proximity to the conducting element results in the conducting element acting as an antenna with a low efficiency, i.e. a structure which is not very efficient at radiating such that the communication distance to the hearing device has to be small in order to ensure detection of the hearing device. The conducting element and the ground plane may be designed such that the conducting element couple to the hearing device antenna only when the hearing device is at a distance of less than 10 cm to the charging device, such as less than 5 cm to the charging device, such as less than 1 cm to the charging device, such as within the charging device.

The substrate may be defined by its dielectric constant (relative permittivity). Substrates with a dielectric constant lower than 20, such as lower than 10, may be used. Typically, materials with a dielectric constant from 3 to 6 are used. The substrate may be made of materials such as plastic, flexprint, ceramic, semiconductors, etc. The support substrate may also be characterized by its thickness. The thickness of the support substrate may define coupling between the conducting element and the ground plane when the ground plane is provided on a surface opposite of the surface where the conducting element is arranged. The thickness of the support substrate may depend on the dielectric constant and an operation wavelength of the hearing device antenna.

In some embodiments, a first distance between the conducting element and the ground plane may be less than 1/20 of a first wavelength, such as less than 1/40 of the first wavelength, such as less than 1/100 of the first wavelength. The first wavelength corresponds to the first frequency. The first frequency may be 2.4 GHz what corresponds to the first wavelength being 125 mm. The first distance may be shorter than 200 µm, such as shorter than 100 µm, such as shorter than 50 µm. Such a close proximity between the conducting element and the ground plane ensures low efficiency of the coupling structure and thereby precise detection of the hearing device being in or close to the charging device.

In some embodiments, the first distance is dependent on the first frequency of the hearing device antenna and/or the dielectric constant of the substrate. When designing a coupling structure conducting element, designed for low power radiation, a substrate with a high value of permittivity is desired, so that the fields are more tightly contained (less fringing), resulting in less radiation. Generally, the larger the dielectric constant is the larger the distance between the conducting element and the ground plane may be.

In some embodiments, the conducting element has a first end interconnected to the charging device wireless communication unit and a second end being an open end. The first end interconnected to the charging device wireless communication unit may thereby form a feed point for the conducting element. Alternatively, the conducting element may have a first branch and a second branch, and wherein a first end of each of the first and second branches is interconnected with the charging device wireless communication unit, and wherein a second end of each of the first and second branches is an open end.

In some embodiments, the conducting element has an elongated conducting shape, a meandering shape or a patch shape. The conducting element may be in a form of a copper element. The conducting element may occupy an area on the substrate which is smaller than an area occupied by the ground plane. Having the conducting element realised as a simple conducting trace, patch, or tape, the design of the coupling structure is simplified.

In some embodiments, the conducting element is configured to be non-resonant at the first frequency, such as to be non-resonant in a frequency range around the first frequency of the hearing device antenna. To obtain a non-resonant structure a length of the conducting element may be configured to be different from a quarter of a wavelength (corresponding to the first frequency) and any multiples thereof at the intended operational frequency of the hearing device.

In some embodiments, the charging device is configured for initiating charging without a further galvanic connection. The charging device may start charging the hearing device wirelessly and as soon as the hearing device is in a close proximity of the charging device.

In some embodiments, the charging device comprises a first cavity configured for receiving the hearing device, and wherein, the hearing device antenna, upon insertion of the hearing device in the first cavity, is proximate the conducting element. By providing the conducting element close to the antenna of the hearing device efficient coupling between the two is ensured. The closer the conducting element to the hearing device antenna is, upon insertion of the hearing device into the charging device, the more flexibility in designing of the coupling structure is allowed.

In some embodiments, the charging device wireless communication unit is configured to initiate communication with the hearing device upon detection of the frequency response modification. The charging device may be configured to communicate a presence signal to the hearing device, the presence signal indicating presence of the hearing device in the charging device. Once the communication between the two devices is initiated and the presence signal received at the hearing device charging of the hearing device may start. Also, once the communication between the hearing device and the charging device has been initiated, the hearing device may be set into the first state, and a setting of the hearing device may be changed, e.g. such that a receiver or speaker of the hearing device may be disabled. In an alternative, the hearing device may be configured to communicate a presence signal to the charging device.

In some embodiments, the hearing device further comprises a processing unit, the processing unit being configured to, upon receiving the presence signal, control at least one hearing device setting. In the alternative embodiment, when the presence signal is generated at the hearing device, the hearing device may transmit the presence signal to the charging device and the processing unit may, upon transmission of the presence signal, control one or more hearing device settings. It is an advantage to provide a system in which only one or more hearing device settings may be controlled as charging of the hearing device may then be continued without any disturbance.

In some embodiments, the hearing device comprises at least one hearing device transducer, and wherein the hearing device setting is an on/off setting of the at least one transducer. It is an advantage of being able to control the on/off setting of the at least one transducer while the hearing device is inserted into the charging device. For example, the hearing device may be operated so that e.g. a gain for the speaker is significantly reduced, or so that an output transducer, such as a receiver or speaker, is turned off. It is advantageous, that the hearing device, in the first state is not turned completely off, but that only an output sound from the hearing device, such as from a transducer, such as an output transducer, such as a receiver or speaker, is turned off or significantly reduced, while the hearing device is still capable of communicating e.g. with a charging device, such as a charging device, for charging a battery of the hearing device. Hereby, in an embodiment, the hearing device may be positioned in a charging device, such as a charging device, while no squealing is heard, even without the user having to manually adjust the hearing device to be in an idle mode or charging mode. It is an advantage of not turning the hearing device off, that e.g. charging information may be exchanged between the charging device and the hearing device.

In some embodiments, the at least one hearing device setting is a gain setting. According to this embodiment the gain of the transducer may be controlled such that the gain is controlled to be reduced, such as to be zero or close to zero such that the transducer is prevented to generate any hearable sound.

In some embodiments, proximity of the hearing device to the charging device is determined by detecting the modification of the frequency response. Once the hearing device, and its antenna are close to the charging device and its coupling structure, the hearing device antenna will influence the electric field around the coupling structure and the frequency response will then modify the frequency response of the coupling structure which detection may in turn indicate the presence of the hearing device in or close to the charging device. Having the coupling structure predominantly sensitive to presence of the hearing device antenna means that such coupling structure may not be disturbed by other signals present in the surrounding environment of the coupling structure.

In some embodiments, coupling of the hearing device antenna to the conducting element is enabled when a level of modification in the frequency response is above a first threshold level. The closer the hearing device antenna is to the conducting element of the charging device, the frequency response of the coupling structure is more modified. In order to couple to the hearing device antenna, i.e. in order to achieve matching between the antenna and the conducting element, the frequency response of the coupling structure may need to be modified to a certain degree, i.e. above the first threshold level. When the hearing device is at a distance of about 5 cm, the conducting structure may experience a resonance at the operational frequency of the antenna and thus the frequency response will modify. In some embodiments, coupling between the antenna and the conducting element may be established even before the conducting element starts to resonate. It is an advantage that the coupling is established and possibly detected when the frequency response is just above a first threshold level as the setting(s) of the hearing device may be controlled before the hearing device is engaged in the charging device.

In some embodiments, the modification of the frequency response is determined by a detection of a reflected power level below the first threshold.

In some embodiments, proximity of the hearing device to the charging device is determined by detecting modification of a frequency response of the conducting element. The charging device wireless communication unit may be configured to detect modification of the frequency response. The charging device wireless communication unit may then communicate the detected modification of the frequency response to the processing unit of the charging device which in turn may derive a distance between the hearing device and the charging device or a range within which the hearing device is with respect to the charging device.

In some embodiments, the charging device further comprises an impedance matching circuit. The impedance matching circuit may be configured to match an impedance of the charging device wireless communication unit to the conducting element when the hearing device is inserted into the charging device.

In some embodiments, the impedance matching circuit is configured to set an impedance of the conducting element as seen from the wireless communication unit. The reflected power, such as a level of reflected power, may be determined, for example, by a degree of matching between the charging device wireless communication unit and the conducting element or vice versa, that the reflected power reflects the degree of matching between the charging device wireless communication unit and the conducting element. The conducting element, as typically any other antenna, is sensitive to its surrounding environment, and the performance of the charging device, including the charging device wireless communication unit and the coupling structure, may be configured to be optimized when the hearing device is inserted in the charging device. The impedance matching circuit may be configured to match the impedance of the conducting element to the charging device communication unit in scenarios when the conducting element is influenced by the hearing device antenna.

In some embodiments, the impedance of the conducting element as seen from the charging device wireless communication unit determines a reflection coefficient of the conducting element and the impedance matching circuit.

In some embodiments, the reflection coefficient determines a proportion of power emitted from the charging device wireless communication unit being reflected back into the charging device wireless communication unit. The reflection coefficient is a function of frequency and also a function of the proximity of the hearing device. The reflection coefficient may be detected and the modification of the frequency response determined based on the reflection coefficient. In some embodiment, changes in the reflection coefficient may be used to determine the state of the hearing device, i.e. whether the hearing device is in the charging device or far away from it such that no connection between the two devices can be established.

In some embodiments, the impedance matching circuit is configured so that when the reflection coefficient is above a second threshold, then the hearing device is not in the charging device. In this case, most of the power emitted from the wireless communication unit of the charging device is reflected back. The conducting element, in this scenario, does not act as an antenna as it typically receives less than 10% of the power emitted from the charging device wireless communication unit.

In some embodiments, the impedance matching circuit is configured so that when the reflection coefficient is below the second threshold, then the hearing device is in the charging device.

In some embodiments, the charging device wireless communication unit has a first impedance, and wherein the conducting element has a second impedance, and wherein a difference between the first impedance and the second impedance is at least 30% when the hearing device is not inserted into the charging device. In other words, when the impedance of the conducting element is not matched to the charging device's wireless communication unit, the hearing device is not in the charging device. In this case, the reflection coefficient is relatively high. The wireless communication unit of the charging device may be designed to have a predetermined impedance at the first frequency. The conducting element itself has another impedance value at the first frequency. While the impedance of the charging device wireless communication unit may not change when its surrounding environment changes, the impedance of the conducting element will change when its surrounding environment changes. In particular, the impedance of the conducting element may be influenced by the hearing device, and particularly by the hearing device antenna. When the hearing device is not in the charging device, the conducting element is designed to have an impedance value that is at least 30% different from the predetermined impedance of the charging device's wireless communication unit. In other words, the two impedances are not matched in such scenario, and the matching circuit may not influence the matching.

In some embodiments, the charging device wireless communication unit has a first impedance, and wherein the conducting element has a second impedance, and wherein a difference between the first impedance and the second impedance is less than 10% when the hearing device is received in the charging device. The closer the hearing device is to the charging device, more influenced and changed is the impedance of the conducting element. When the hearing device is in a close proximity to the conducting element, the conducting element impedance changes such that its value is closer to the impedance of the charging device wireless communication unit.

In some embodiments, the system comprises a first hearing device and a second hearing device. The charging device may be configured to receive the first hearing device and the second hearing device in a first cavity and a second cavity, respectively, of the charging device. The antenna of the first hearing device, upon insertion of the first hearing device into the first cavity may be proximate a first part of the conducting element to thereby couple to the conducting element. The antenna of the second hearing device, upon insertion of the second hearing device into the second cavity, may be proximate a second part of the conducting element to thereby couple to the conducting element. In other words, the coupling structure may be designed and positioned in the charging device such that it at least partly overlaps with the first and second cavity and thereby also with the antennas of the first and second hearing device. Modification of the frequency response of the conducting element may then be influenced by presence of both the first and the second hearing device. The processing unit of at least one of the hearing devices may be configured to control at least one setting of both first and second hearing device. The at least one setting may be gain of the output transducers of the first and second hearing device. In this way both hearing devices may be muted simultaneously. The at least one setting may be an on/off setting of the at least one transducer of both first and second hearing device.

In some embodiments, the coupling of the antenna of the first hearing device and the antenna of the second hearing device is configured to have a same coupling strength. This may be obtained by providing the coupling structure which is symmetrical with respect to the antennas of the first and second hearing device, when the hearing devices are inserted into the charging device. By having the same coupling strength for the two antennas, it is ensured that the contribution of the first and the second hearing device to modification of the frequency response of the coupling structure is equal.

In some embodiments, the same coupling is achieved by positioning a further ground plane around a first part of the conducting element. The first part of the conducting element may, for example, be a part of the conducting element closest to the first end, that is closest to the charging device wireless communication unit. This particularly applies for an elongated shaped antenna. The further ground plane further reduces a coupling efficiency of the first part of the conducting element resulting in the coupling structure being more sensitive to presence of the hearing device.

In some embodiments, a second distance between the conducting element and the further ground plane may be the same as the first distance or different from the first distance. The second distance may be between 0.1 mm to 0.2 mm. The second distance may fulfil the minimum distance required by the support substrate design. The second distance may extend in a direction parallel to the first layer of the support substrate, such as perpendicular to the normal of the first layer of the support substrate.

According to a second aspect a method of charging a hearing device in a charging device is disclosed. The hearing device comprises a hearing device antenna, a hearing device wireless communication unit and a rechargeable battery, the hearing device wireless communication unit being coupled to the hearing device antenna, the hearing device wireless communication unit and the hearing device antenna being configured for transmission and reception of electromagnetic signals at a first frequency, the rechargeable battery configured to be charged by the charging device. The method comprising: receiving the hearing device in the charging device, the charging device comprising a charging device wireless communication unit, the charging device wireless communication unit being interconnected with a coupling structure, the coupling structure comprising a conducting element and a ground plane, the ground plane being positioned within a first distance of the conducting element configuring the conducting element for near-field coupling with the hearing device antenna.

In some embodiments, the conducting element couples to the ground plane. The conducting element may be provided on a first surface of a support substrate extending over a first area, the ground plane being provided on an opposite second surface of the support substrate and at least partly overlaying the first area. The method may further comprise:
- positioning the hearing device in the charging device,
- coupling the coupling structure of the charging device with the hearing device antenna,
- modifying a frequency response of the conducting element to enable coupling of the hearing device antenna to the conducting element,
- initiating communication between the hearing device wireless communication unit and the charging device wireless communication unit.

According to a third aspect charging device for charging of a hearing device is disclosed. The charging device is configured to receive the hearing device. The charging device comprises a charging device wireless communication unit, the charging device wireless communication unit being interconnected with a coupling structure. The coupling structure comprises a conducting element and a ground plane, the ground plane being positioned within a first distance of the conducting element so that the conducting element couples to the ground plane. A frequency response of the conducting element is modified upon bringing a hearing device antenna into proximity of the conducting element to thereby detect presence of the hearing device in the charging device.

The present invention relates to different aspects including the system comprising the hearing device and the charging device, the system described above and in the following, and corresponding charging device and the method of charging a hearing device in a charging device, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an exemplary embodiment of the system according to the present disclosure.
Fig. 2 schematically illustrates another exemplary embodiment of the system according to the present disclosure.
Fig. 3 schematically illustrates yet another exemplary embodiment of the system according to the present disclosure.
Fig. 4 shows a dependence of a reflected power versus frequency.
Fig. 5 schematically illustrates various exemplary embodiments of the coupling structure according to the present disclosure.
Fig. 6 is a flowchart illustrating the method according to the present disclosure.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

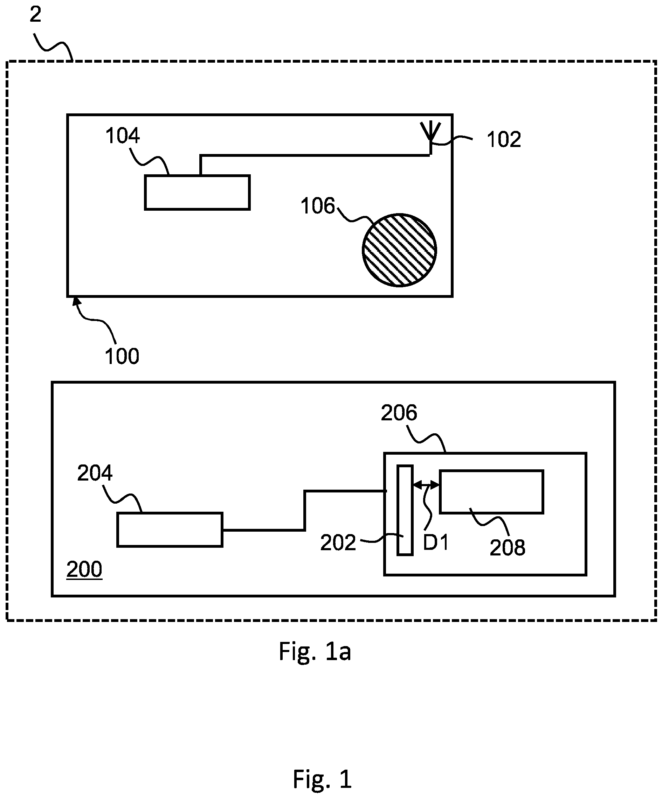

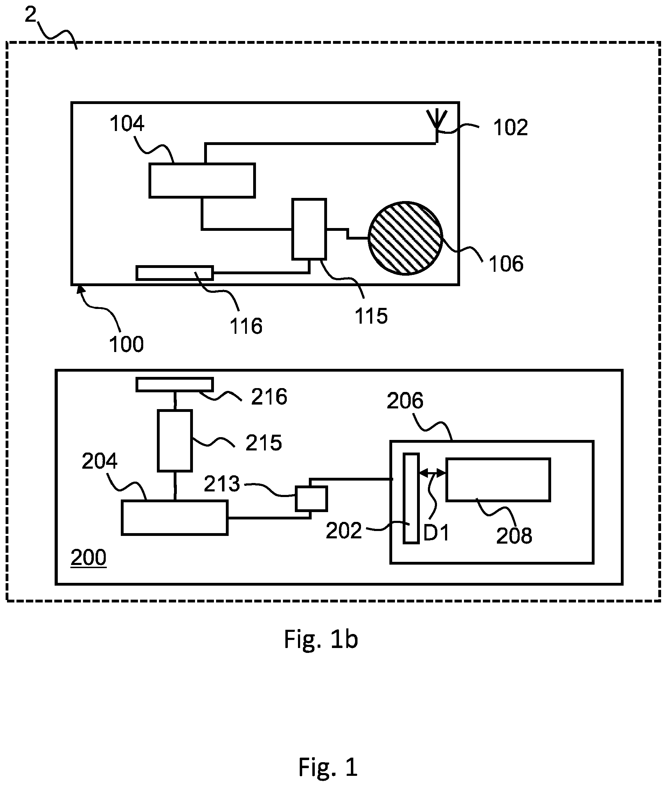

Fig. 1 schematically illustrates an exemplary embodiment of the system 2 according to the present disclosure.

Fig. 1a illustrates the system 2 comprises a hearing device 100 and a charging device 200. The hearing device 100 comprises a hearing device antenna 102, a hearing device wireless communication unit 104. The hearing device wireless communication unit 104 is coupled to the hearing device antenna 102. The hearing device wireless communication unit 104 and the hearing device antenna 102 are configured for transmission and reception of electromagnetic signals at a first frequency. The hearing device further comprises a rechargeable battery 106 configured to be charged by the charging device 200. The charging device 200 is configured to receive the hearing device 100 to enable charging of the hearing device 100. The charging device 200 comprises a charging device wireless communication unit 204. The charging device wireless communication unit 204 is interconnected with a coupling structure 206. The coupling structure 206 comprises a conducting element 202 and a ground plane 208. The ground plane 208 is positioned within a first distance D1 of the conducting element 202. The coupling structure 206 is configured so that upon reception of the hearing device 100 in the charging device 200, a frequency response of the conducting element 202 is modified thereby enabling near-field coupling of the hearing device antenna 102 to the conducting element 202.

Fig. 1b illustrates the system in Fig. 1a further comprising a hearing device charging circuit in the hearing device 100, a charging device charging circuit in the charging device 200 and an impedance matching circuit 213 in the charging device 200.

The hearing device charging circuit comprises the rechargeable battery 106, a hearing device power management unit 115 and a receiver charging element 116. The receiver charging element 116 may be provided by a magnetic antenna. The hearing device power management unit 115 is connected with the hearing device wireless communication unit 104. The receiver charging element 116 may be a receiver charging coil.

The charging device charging circuit comprises a charging device power management unit 215 and a transmitter charging element 216. The charging device power management unit 215 is connected with the charging device wireless communication unit 204. The transmitter charging element 216 may be provided by a magnetic antenna. The transmitter charging element 216 may be a transmitter charging coil.

The receiver charging element 116 and the transmitter charging element 216 may be configured for wired or wireless power transfer. For the wireless power transfer a number of different technologies can be used such as inductive coupling, resonant inductive coupling, capacitive coupling, magneto-dynamic coupling, microwaves, light waves, etc.

The impedance matching circuit may be configured to match an impedance of the charging device wireless communication unit 204 to the conducting element 202 when the hearing device 100 is inserted into the charging device 200.

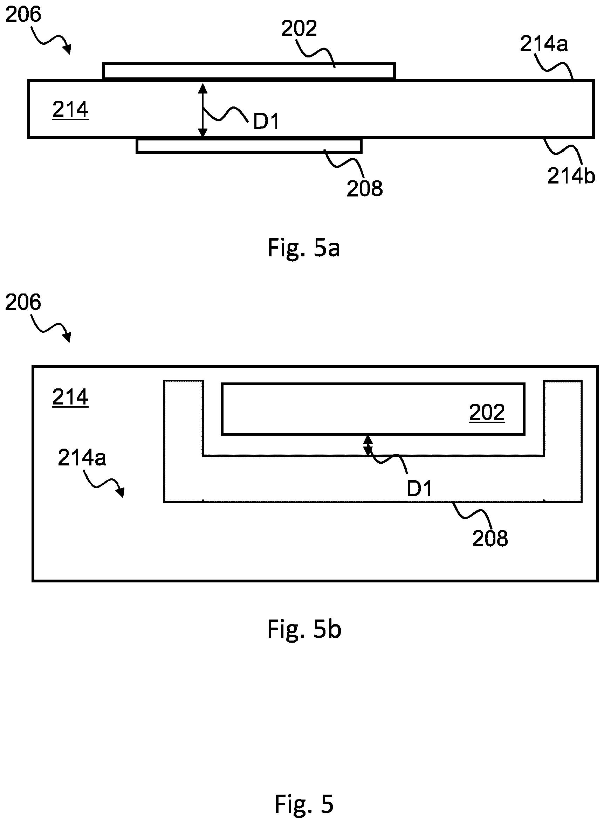

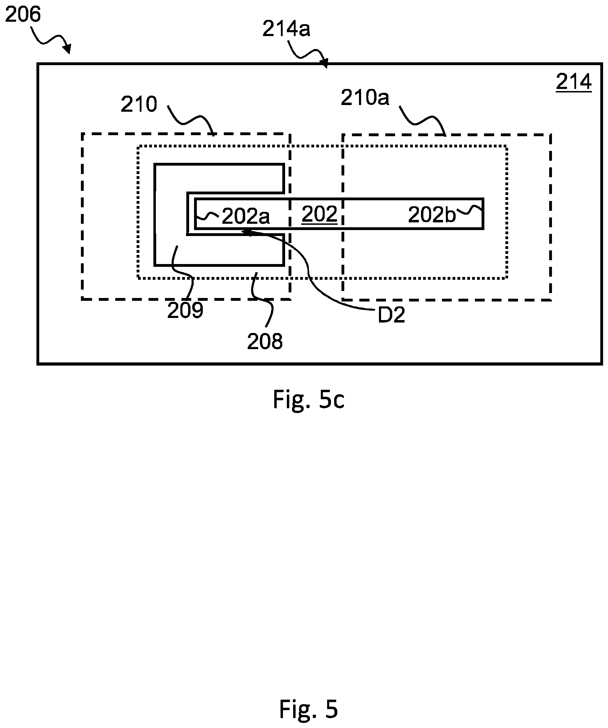

In Fig. 1a and 1b the conducting element 202 and the ground plane 208 are shown as being arranged side by side in a first plane separated with the first distance D1, wherein the first distance D1 extends in a direction parallel to the plane. As an alternative, and as shown in Fig. 5a, the conducting element 202 and the ground plane 208 are arranged in two different planes, preferably two parallel planes, such as in a first and a second plane, separated with the first distance D1, wherein the first distance D1 extends in a direction perpendicular to the planes. The first plane may be parallel and/or coinciding with a first surface 214a of a support substrate 214, as shown in Fig. 5, and the second plane may be parallel and/or coinciding with a second surface 214b of a support substrate 214, as shown in Fig. 5.

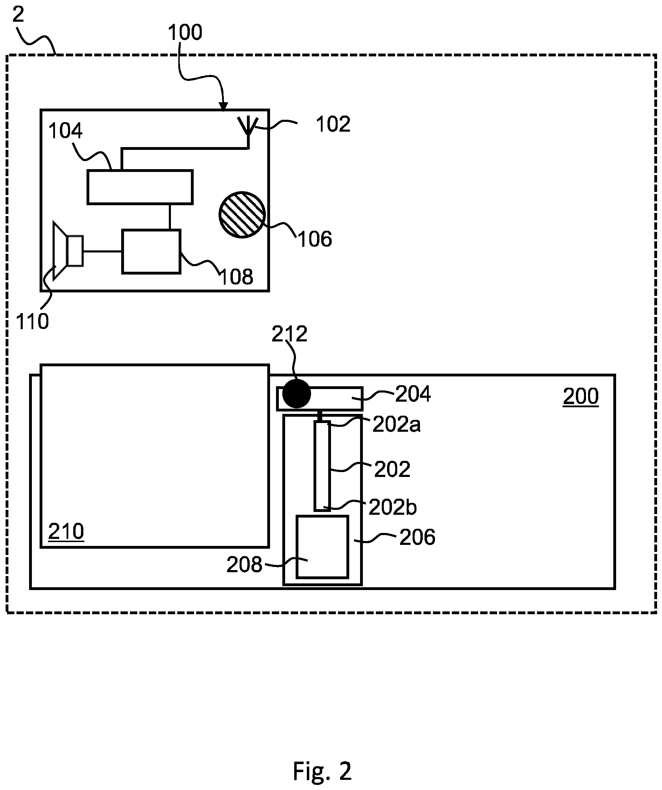

Fig. 2 schematically illustrates another exemplary embodiment of the system 2 according to the present disclosure. Fig. 2 illustrates all the elements described in connection with Fig. 1 and further illustrates additional components that may form part of the system 2. The charging device 200 may comprise a first cavity 210 configured for receiving the hearing device 100. The hearing device antenna 102, upon insertion of the hearing device 100 in the first cavity 210, may be proximate the conducting element 202. In some embodiment, the conducting element 202 has a first end 202a interconnected to the charging device wireless communication unit 204 and a second end 202b being an open end.

The charging device wireless communication unit 204 may comprise a detector 212 configured for detecting power reflected from the conducting element 202 into the charging device wireless communication unit 204. The frequency response modification may then be determined from the power reflected from the conducting element 202 into the charging device wireless communication unit 204, the reflected power being measured by the detector 212. A reflected power above a first threshold indicates that the hearing device 100 is not received in the charging device 200. A reflected power below the first threshold indicates that the hearing device 100 is received in the charging device 200. The charging device wireless communication unit 204 may be configured to initiate communication with the hearing device 100 upon detection of the frequency response modification. The charging device 200 may be configured to communicate a presence signal to the hearing device 100, the presence signal indicating presence of the hearing device 100 in the charging device 200. The presence signal may be received by the hearing device antenna 102 and/or hearing device communication unit 104.

The hearing device 100 may further comprise a processing unit 108. The processing unit may be interconnected with the hearing device antenna 102 and/or hearing device communication unit 104. The processing unit 108 may be configured to, upon receiving the presence signal, control at least one hearing device setting. The hearing device 100 may further comprise a transducer 110. The transducer 110 may be interconnected with the processing unit 108. The hearing device setting may then be an on/off setting of the at least one transducer, and/or a gain setti ng.

It is an advantage of having a charging device 200 with a simple coupling structure 206 which frequency response can be modified under influence of the hearing device 100 being inserted into the charging device 200. By detecting the modification of the frequency response it is possible to detect a state of the hearing device 100 in which the hearing device 100 is inserted into the charging device. The hearing device 100 may then be operated according to such state. It is additionally an advantage that the state of the hearing device 100 can be determined by using a measurement, such as a simple measurement by a detector 212, of frequency response of the conducting element. It is an additional advantage that the hearing device 100 may be prevented from squealing when inserted into the charging device.

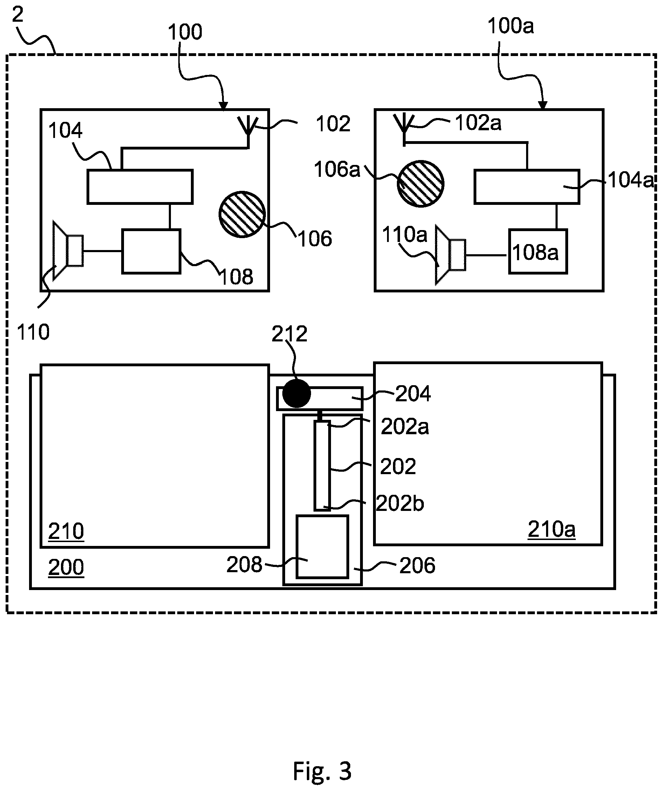

Fig. 3 schematically illustrates yet another exemplary embodiment of the system 2 according to the present disclosure. In this embodiment, in addition to the elements described in connection with Fig. 2, the system 2 comprises a first hearing device 100 and a second hearing device 100a. the second hearing device 100a may comprise the same components as the first hearing device 100, these are annotated with the corresponding number and an additional label "a". The charging device 200 is configured to receive the first hearing device 100 in the first cavity 210 and the second hearing device 100a in a second cavity 210a of the charging device 200. The antenna 102 of the first hearing device 100, upon insertion of the first hearing device 100 into the first cavity 210, may be proximate a first part (left side) of the conducting element 202. The antenna 102a of the second hearing device 100a, upon insertion of the second hearing device 100a into the second cavity 210a, may be proximate a second part (right side) of the conducting element 102.

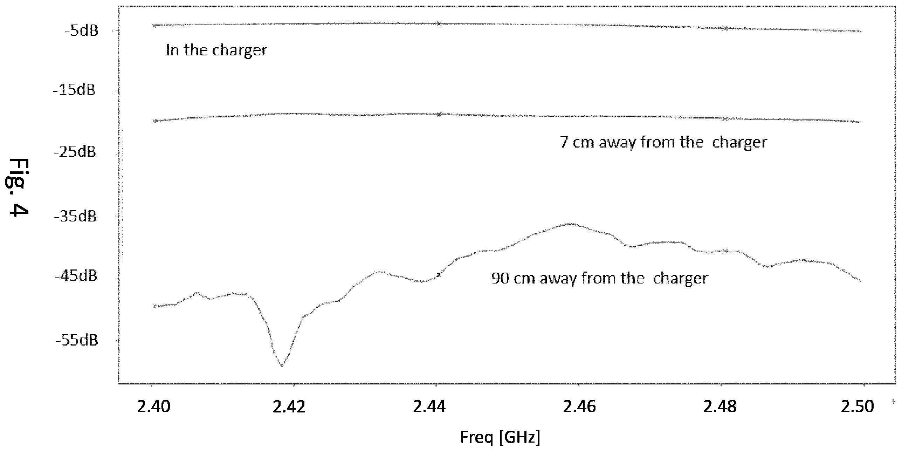

Fig. 4 shows a dependence of a reflected power versus frequency. The frequency response modification may be determined by detecting power reflected from the conducting element into the charging device wireless communication unit. A reflected power above a first threshold, such as above -6 dB, indicates that the hearing device is not received in the charging device. When the hearing device is far from the charging device, most of the power transmitted from the conducting element is reflected back into the charging device wireless communication unit. The bottom graph shows the power reflected to the charging device's communication unit for a scenario when the hearing device is far from the charging device, such as 90 cm away from the charging device. It can be seen that the conducting element is designed such that most of the power sent from the charging device's communication unit is reflected back into the charging device wireless communication unit. The middle graph shows a scenario when the hearing device is 7 cm away from the charging device. The reflected power is still relatively high, -22 dB (about 80%). When the hearing device is received in the charging device, power reflected into the charging device wireless communication unit is smaller than in the case when the hearing device is far away (and when all the power is reflected back into the charging device wireless communication unit). The top graph illustrates a scenario when the hearing device is in the charging device. In this case only about -4 dB power (15%) power is reflected back to the charging device's communication unit. A reflected power below the first threshold, such as less than -6 dB, indicates that the hearing device is received in the charging device. The hearing device antenna and the conducting element are well matched if less than 10% (-3 dB) of the power is reflected back to the charging device's communication unit.

Fig. 5 schematically illustrates various exemplary embodiments of the coupling structure 206 according to the present disclosure. All three coupling structures 206 shown in Fig. 5a-b may be implemented in the systems shown in Figs. 1-3.

Fig. 5a illustrates a cross-sectional side view of one embodiment of the coupling structure 206 wherein the conducting element 202 is provided on a first surface 214a of a support substrate 214 and extending over a first area. In this embodiment, the ground plane 208 is provided on an opposite second surface 214b of the support substrate 214 and at least partly overlaying the first area.

Fig. 5b illustrates a top view of another embodiment of the coupling structure 206 wherein the conducting element 202 and/or the ground plane 208 is provided on a first surface 214a of a support substrate 214 and the ground plane 208 is provided adjacent to and/or surrounding at least a part of the conducting element 202.

Fig. 5c illustrates a top view of yet another embodiment of the coupling structure 206 wherein the conducting element 202 is provided on the first surface 214a of a first layer of the support substrate 214 and the ground plane 208 is provided on/in a second layer of the support substrate 214. The placement of the ground plane 208 being provided on/in the none visible second layer of the support substrate 214 being indicated by dotted lines. The conducting element 202 is extending over a first area on the first surface 214a of the support substrate 214, and the ground plane 208 is at least partly overlaying the first area.

In this embodiment the system comprises a first hearing device and a second hearing device (not shown), and the charging device is configured to receive the first hearing device and the second hearing device in a first cavity 210 and a second cavity 210a, respectively, of the charging device. The placement of the first cavity 210 and the second cavity 210a relative to the coupling structure is shown with broken lines. Upon insertion of the first hearing device into the first cavity 210, the antenna of the first hearing device is proximate a first part of the conducting element 202, such as the first end of the conducting element 202a. Upon insertion of the second hearing device into the second cavity 210a the antenna of the second hearing device is proximate a second part of the conducting element 202, such as the second end of the conducting element 202b. Wherein the first end 202a is interconnected to the charging device wireless communication unit (not shown) and the second end 202b is an open end.

This coupling structure 206 further comprises a further ground plane 209 arranged around the first part/end of the conducting element 202a. The conducting element 202 and the further ground plane 209 may be arranged on/in the first layer of the support substrate 214, such as on the first surface 214a of the first layer of the support substrate 214. The first layer of the support substrate may be parallel with the second layer of the support substrate. The first layer of the support substrate and the second layer of the support substrate may be flexible layers. The first layer of the support substrate may be arranged between the first and/or second cavity, respectively, and the second layer of the support substrate. The ground plane 208 and the further ground plane 209 may be connected by vias.

The ground plane 208 is positioned within a first distance D1 (as shown in figure 5a) of the conducting element 202, wherein the first distance D1 extends in a direction perpendicular to the first layer and the second layer. The further ground plane 209 is positioned within a second distance D2 of the conducting element 202, wherein the second distance D2 extends in a direction parallel to the first layer. The second distance D2 may be the same as the first distance D1. The second distance D2 may be different from the first distance D1.

The coupling structure 206 hereby provides that the coupling of the antenna of the first hearing device and the antenna of the second hearing device is configured to have a same coupling strength.

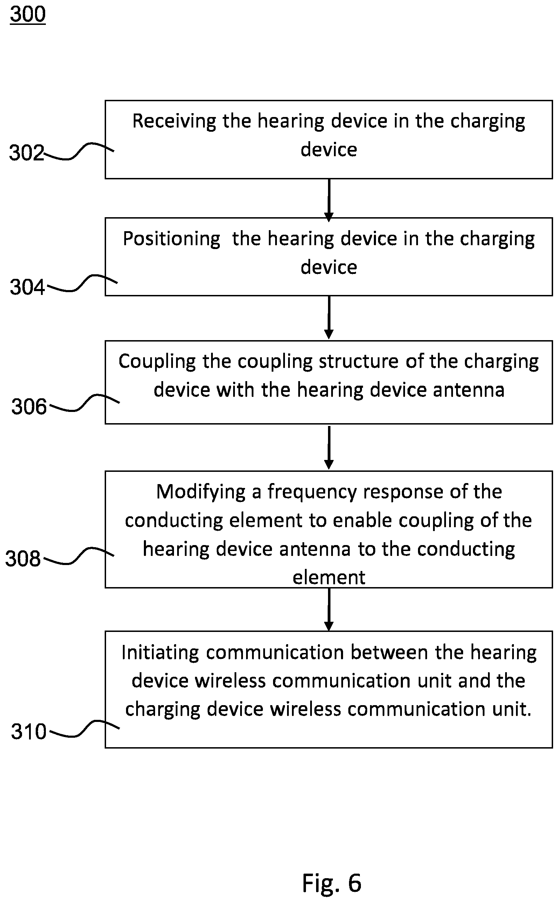

Fig. 6 is a flowchart illustrating the method 300 according to the present disclosure. The method of charging a hearing device in a charging device comprises:
- receiving the hearing device in the charging device, 302,
- positioning the hearing device in the charging device, 304
- coupling the coupling structure of the charging device with the hearing device antenna, 306
- modifying a frequency response of the conducting element to enable coupling of the hearing device antenna to the conducting element, 308
- initiating communication between the hearing device wireless communication unit and the charging device wireless communication unit, 310.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A system comprising a hearing device and a charging device, the hearing device comprising
   a hearing device antenna,
   a hearing device wireless communication unit, the hearing device wireless communication unit being coupled to the hearing device antenna, the hearing device wireless communication unit and the hearing device antenna being configured for transmission and reception of electromagnetic signals at a first frequency, and
   a rechargeable battery configured to be charged by the charging device,
   the charging device being configured to receive the hearing device to enable charging of the hearing device, the charging device comprising
   a charging device wireless communication unit, the charging device wireless communication unit being interconnected with a coupling structure,
   the coupling structure comprising
   a conducting element and a ground plane, the ground plane being positioned within a first distance of the conducting element,
   wherein the coupling structure is configured so that upon reception of the hearing device in the charging device, a frequency response of the conducting element is modified thereby enabling near-field coupling of the hearing device antenna to the conducting element.
2. The system according to item 1, wherein enabling coupling of the hearing device antenna to the conducting element initiates communication between the hearing device wireless communication unit and the charging device wireless communication unit.
3. The system according to any of the preceding items, wherein presence of the hearing device in the charging device is detected upon detection of modification of the frequency response.
4. The system according to any of the preceding items, wherein the charging device wireless communication unit further comprises a detector configured for detecting power reflected from the conducting element into the charging device wireless communication unit.
5. The system according to item 4, wherein the frequency response modification is determined by determining power reflected from the conducting element into the charging device wireless communication unit, and wherein a reflected power above a first threshold indicates that the hearing device is not received in the charging device; and wherein a reflected power below the first threshold indicates that the hearing device is received in the charging device.
6. The system according to any of the preceding items, wherein the conducting element is provided on a first surface of a support substrate extending over a first area, the ground plane being provided on an opposite second surface of the support substrate and at least partly overlaying the first area; or wherein the conducting element is provided on a first surface of a support substrate, the ground plane being provided adjacent to and surrounding at least a part of the conducting element.
7. The system according to any of the preceding items, wherein the first distance is less than 1/100 of a first wavelength.
8. The system according to any of the preceding items, wherein the first distance is dependent on the first frequency of the hearing device antenna and/or a dielectric constant of the support substrate.
9. The system according to any of the preceding items, wherein the conducting element has a first end interconnected to the charging device wireless communication unit and a second end being an open end; or wherein the conducting element has a first branch and a second branch, and wherein a first end of each of the first and second branches is interconnected with the charging device wireless communication unit, and wherein a second end of each of the first and second branches is an open end.
10. The system according to any of the preceding items, wherein the conducting element has an elongated conducting shape, a meandering shape or a patch shape.
11. The system according to any of the preceding items, wherein the conducting element is configured to be non-resonant at the first frequency, such as to be non-resonant in a frequency range around the first frequency of the hearing device antenna.
12. The system according to any of the preceding items, wherein the charging device is configured for initiating charging without a further galvanic connection.
13. The system according to any of the preceding items wherein the charging device comprises a first cavity configured for receiving the hearing device, and wherein, the hearing device antenna, upon insertion of the hearing device in the first cavity, is proximate the conducting element.
14. The system according to any of the preceding items, wherein the charging device wireless communication unit is configured to initiate communication with the hearing device upon detection of the frequency response modification, and wherein the charging device is configured to communicate a presence signal to the hearing device, the presence signal indicating presence of the hearing device in the charging device.
15. The system according to item 14, wherein the hearing device further comprises a processing unit, the processing unit being configured to, upon receiving the presence signal, control at least one hearing device setting.
16. The system according to item 15, wherein the hearing device comprises at least one hearing device transducer, and wherein the hearing device setting is an on/off setting of the at least one transducer.
17. The system according to any of items 15-16, wherein the at least one hearing device setting is a gain setting.
18.The system according to any of the preceding items, wherein proximity of the hearing device to the charging device is determined by detecting the modification of the frequency response.
19. The system according to any of the preceding items, wherein coupling of the hearing device antenna to the conducting element is enabled when a level of modification in the frequency response is above a first threshold level.
20. The system according to item 19, wherein the modification of the frequency response is determined by a detection of a power level below the first threshold.
21. The system according to any of items 2-20, wherein proximity of the hearing device to the charging device is determined by detecting modification of a frequency response and wherein the charging device wireless communication unit is configured to detect modification in the frequency response.
22. The system according to any of the preceding items, wherein the charging device further comprises an impedance matching circuit.
23. The system according to item 22, wherein the impedance matching circuit is configured to set an impedance of the conducting element as seen from the charging device wireless communication unit.
24. The system according to item 23, wherein the impedance of the conducting element as seen from the charging device wireless communication unit determines a reflection coefficient of the conducting element and the impedance matching circuit.
25. The system according to item 24, wherein the reflection coefficient determines a proportion of power emitted from the charging device wireless communication unit being reflected back into the charging device wireless communication unit.
26. The system according to any of items 24-25, wherein the impedance matching circuit is configured so that when the reflection coefficient is above a second threshold, then the hearing device is not in the charging device.
27. The system according to any of items 24-26, wherein the impedance matching circuit is configured so that when the reflection coefficient is below the second threshold, then the hearing device is in the charging device.
28. The system according to any of items 22-27, wherein the charging device wireless communication unit has a first impedance, and wherein the conducting element has a second impedance, and wherein a difference between the first impedance and the second impedance is at least 30% when the hearing device is not inserted into the charging device.
29. The system according to any of items 22-28, wherein the charging device wireless communication unit has a first impedance, and wherein the conducting element has a second impedance, and wherein a difference between the first impedance and the second impedance is less than 10% when the hearing device is received in the charging device.
30. The system according to any of the preceding items, wherein the system comprises a first hearing device and a second hearing device, and wherein the charging device is configured to receive the first hearing device and the second hearing device in a first cavity and a second cavity, respectively, of the charging device, and wherein, the antenna of the first hearing device, upon insertion of the first hearing device into the first cavity, is proximate a first part of the conducting element; and wherein, the antenna of the second hearing device, upon insertion of the second hearing device into the second cavity, is proximate a second part of the conducting element.
31. The system according to item 30, wherein the coupling of the antenna of the first hearing device and the antenna of the second hearing device is configured to have a same coupling strength.
32. The system according to item 31, wherein the same coupling is achieved by positioning a further ground plane around a first part of the conducting element.
33. A method of charging a hearing device in a charging device,
   the hearing device comprising a hearing device antenna, a hearing device wireless communication unit and a rechargeable battery, the hearing device wireless communication unit being coupled to the hearing device antenna, the hearing device wireless communication unit and the hearing device antenna being configured for transmission and reception of electromagnetic signals at a first frequency, the rechargeable battery configured to be charged by the charging device, the method comprising:
   receiving the hearing device in the charging device, the charging device comprising a charging device wireless communication unit, the charging device wireless communication unit being interconnected with a coupling structure, the coupling structure comprising a conducting element and a ground plane, the ground plane being positioned within a first distance of the conducting element configuring the conducting element for near-field coupling with the hearing device antenna.
34. The method according to item 33, wherein the conducting element couples to the ground plane, the conducting element being provided on a first surface of a support substrate extending over a first area, the ground plane being provided on an opposite second surface of the support substrate and at least partly overlaying the first area,
   the method comprises:
   - positioning the hearing device in the charging device,
   - coupling the coupling structure of the charging device with the hearing device antenna,
   - modifying a frequency response of the conducting element to enable coupling of the hearing device antenna to the conducting element,
   - initiating communication between the hearing device wireless communication unit and the charging device wireless communication unit.
35. A charging device for charging of a hearing device, the charging device configured to receive the hearing device, the charging device comprising
   a charging device wireless communication unit, the charging device wireless communication unit being interconnected with a coupling structure, the coupling structure comprising
   a conducting element and a ground plane, the ground plane being positioned within a first distance of the conducting element so that the conducting element couples to the ground plane, wherein a frequency response of the conducting element is modified upon bringing a hearing device antenna into proximity of the conducting element to thereby detect presence of the hearing device in the charging device.

### LIST OF REFERENCES

- 2: system
- 100: hearing device, first hearing device
- 100a: second hearing device
- 102: hearing device antenna
- 102a: second hearing device antenna
- 104: hearing device wireless communication unit
- 104a: second hearing device wireless communication unit
- 106: rechargeable battery
- 106a: second hearing device rechargeable battery
- 108: processing unit
- 108a: second hearing device processing unit
- 110: transducer
- 110a: second hearing device transducer
- 115: hearing device power management unit
- 116: receiver charging element
- 200: charging device
- 202: conducting element
- 202a: first end of the conducting element
- 202b: second end of the conducting element
- 204: charging device wireless communication unit
- 206: coupling structure
- 208: ground plane
- 209: further ground plane
- D1: first distance
- D2: second distance
- 210: first cavity
- 210a: second cavity
- 212: detector
- 213: impedance matching circuit
- 214: support substrate
- 214a: first surface of the support substrate
- 214b: second surface of the support substrate
- 215: charging device power management unit
- 216: transmitter charging element
- 300: method of charging a hearing device in a charging device
- 302-308: method steps

## Claims

1. A system comprising a hearing device and a charging device,
the hearing device comprising
a hearing device antenna,
a hearing device wireless communication unit, the hearing device wireless communication unit being coupled to the hearing device antenna, the hearing device wireless communication unit and the hearing device antenna being configured for transmission and reception of electromagnetic signals at a first frequency, and
a rechargeable battery configured to be charged by the charging device,
the charging device being configured to receive the hearing device to enable charging of the hearing device, the charging device comprising
a charging device wireless communication unit, the charging device wireless communication unit being interconnected with a coupling structure,
the coupling structure comprising
a conducting element and a ground plane, the ground plane being positioned within a first distance of the conducting element,
wherein the coupling structure is configured so that upon reception of the hearing device in the charging device, a frequency response of the conducting element is modified thereby enabling near-field coupling of the hearing device antenna to the conducting element.

2. The system according to claim 1, wherein enabling coupling of the hearing device antenna to the conducting element initiates communication between the hearing device wireless communication unit and the charging device wireless communication unit.

3. The system according to any of the preceding claims, wherein presence of the hearing device in the charging device is detected upon detection of modification of the frequency response.

4. The system according to any of the preceding claims, wherein the charging device wireless communication unit further comprises a detector configured for detecting power reflected from the conducting element into the charging device wireless communication unit, and wherein the frequency response modification is determined by determining power reflected from the conducting element into the charging device wireless communication unit, and wherein a reflected power above a first threshold indicates that the hearing device is not received in the charging device; and wherein a reflected power below the first threshold indicates that the hearing device is received in the charging device.

5. The system according to any of the preceding claims, wherein the conducting element is provided on a first surface of a support substrate extending over a first area, the ground plane being provided on an opposite second surface of the support substrate and at least partly overlaying the first area; or
wherein the conducting element is provided on a first surface of a support substrate, the ground plane being provided adjacent to and surrounding at least a part of the conducting element.

6. The system according to any of the preceding claims, wherein the conducting element has a first end interconnected to the charging device wireless communication unit and a second end being an open end; or wherein the conducting element has a first branch and a second branch, and wherein a first end of each of the first and second branches is interconnected with the charging device wireless communication unit, and wherein a second end of each of the first and second branches is an open end.

7. The system according to any of the preceding claims, wherein the charging device comprises a first cavity configured for receiving the hearing device, and wherein, the hearing device antenna, upon insertion of the hearing device in the first cavity, is proximate the conducting element.

8. The system according to any of the preceding claims, wherein the charging device wireless communication unit is configured to initiate communication with the hearing device upon detection of the frequency response modification, wherein the charging device is configured to communicate a presence signal to the hearing device, the presence signal indicating presence of the hearing device in the charging device, and wherein the hearing device further comprises a processing unit, the processing unit being configured to, upon receiving the presence signal, control at least one hearing device setting, wherein the hearing device setting is an on/off setting of the at least one transducer.

9. The system according to any of the preceding claims, wherein coupling of the hearing device antenna to the conducting element is enabled when a level of modification in the frequency response is above a first threshold level.

10. The system according to any of the preceding claims, wherein the charging device further comprises an impedance matching circuit, wherein the impedance matching circuit is configured so that when the reflection coefficient is above a second threshold, then the hearing device is not in the charging device, and wherein the impedance matching circuit is configured so that when the reflection coefficient is below the second threshold, then the hearing device is in the charging device.

11. The system according to claim 10, wherein the charging device wireless communication unit has a first impedance, and wherein the conducting element has a second impedance, and wherein a difference between the first impedance and the second impedance is at least 30% when the hearing device is not inserted into the charging device, and wherein the charging device wireless communication unit has a first impedance, and wherein the conducting element has a second impedance, and wherein a difference between the first impedance and the second impedance is less than 10% when the hearing device is received in the charging device.

12. The system according to any of the preceding claims, wherein the system comprises a first hearing device and a second hearing device, and wherein the charging device is configured to receive the first hearing device and the second hearing device in a first cavity and a second cavity, respectively, of the charging device, and wherein, the antenna of the first hearing device, upon insertion of the first hearing device into the first cavity, is proximate a first part of the conducting element; wherein, the antenna of the second hearing device, upon insertion of the second hearing device into the second cavity, is proximate a second part of the conducting element, and wherein the coupling of the antenna of the first hearing device and the antenna of the second hearing device is configured to have a same coupling strength.

13. A method of charging a hearing device in a charging device,
the hearing device comprising a hearing device antenna, a hearing device wireless communication unit and a rechargeable battery, the hearing device wireless communication unit being coupled to the hearing device antenna, the hearing device wireless communication unit and the hearing device antenna being configured for transmission and reception of electromagnetic signals at a first frequency, the rechargeable battery configured to be charged by the charging device, the method comprising:
receiving the hearing device in the charging device, the charging device comprising a charging device wireless communication unit, the charging device wireless communication unit being interconnected with a coupling structure, the coupling structure comprising a conducting element and a ground plane, the ground plane being positioned within a first distance of the conducting element configuring the conducting element for near-field coupling with the hearing device antenna.

14. The method according to claim 13, wherein the conducting element couples to the ground plane, the conducting element being provided on a first surface of a support substrate extending over a first area, the ground plane being provided on an opposite second surface of the support substrate and at least partly overlaying the first area,
the method comprises:
- positioning the hearing device in the charging device,
- coupling the coupling structure of the charging device with the hearing device antenna,
- modifying a frequency response of the conducting element to enable coupling of the hearing device antenna to the conducting element,
- initiating communication between the hearing device wireless communication unit and the charging device wireless communication unit.

15. A charging device for charging of a hearing device, the charging device configured to receive the hearing device, the charging device comprising
a charging device wireless communication unit, the charging device wireless communication unit being interconnected with a coupling structure, the coupling structure comprising
a conducting element and a ground plane, the ground plane being positioned within a first distance of the conducting element so that the conducting element couples to the ground plane, wherein a frequency response of the conducting element is modified upon bringing a hearing device antenna into proximity of the conducting element to thereby detect presence of the hearing device in the charging device.
